(19) Europäisches Patentamt
European Patent Office
Office européen des brevets

(11) **EP 2 447 015 A2**

(12) **EUROPEAN PATENT APPLICATION**

(43) Date of publication:
**02.05.2012 Bulletin 2012/18**

(51) Int Cl.:
**B25J 9/16** (2006.01)  **G05B 19/4155** (2006.01)

(21) Application number: **11185503.7**

(22) Date of filing: **17.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.10.2010 JP 2010244554**

(71) Applicant: **Kabushiki Kaisha Yaskawa Denki
Kitakyushu-shi, Fukuoka 806-0004 (JP)**

(72) Inventor: **Yoshida, Junya
Kitakyushu-Shi,
Fukuoka 806-0004 (JP)**

(74) Representative: **Gendron, Vincent Christian et al
S.A. Fedit-Loriot
38, avenue Hoche
75008 Paris (FR)**

(54) **Robot control apparatus, robot control method, and robot system**

(57)     A notification signal representing that a predetermined part in a robot moves to a predetermined position is appropriately output. A robot control apparatus is configured such that a vector calculator calculates a first vector representing a moving direction of a reference portion at a reference portion position and a second vector representing relative positions of a signal output position and the reference portion position. The robot control apparatus is configured such that a signal output determiner determines whether or not the notification signal is output on the basis of the first vector and the second vector that are calculated by the vector calculator.

FIG. 1

**Description**

BACKGROUND OF THE INVENTION

FIELD OF THE INVENTION

The present invention relates to a robot control apparatus, a robot control method, and a robot system that control a robot.

DESCRIPTION OF THE RELATED ART

Conventionally, there has been known a robot system that moves a reference portion of a robot according to a command path registered in advance.

A technique has been proposed that outputs a notification signal under the condition in which, with respect to the robot system, for example, a predicted position predicted from a moving track of the reference portion or an estimated position estimated from an operation command for the robot is matched with a predetermined signal output position (refer to Japanese Unexamined Patent Application Publication Nos. 1997-258812 and 2006-243926).

SUMMARY OF THE INVENTION

However, the conventional technique described above has a problem in which the notification signal may not be appropriately output.

For example, in the robot, since a response may be delayed, the reference portion of the robot may shift from an ideal position corresponding to an operational command. More specifically, the predicted position or the estimated position may be different from an actual position of the reference portion.

Therefore, even though a notification signal is output under the condition that the predicted position or the estimated position is matched with the signal output position, an output timing of the notification signal does not easily become appropriate. For example, when an actual position of the reference portion is ahead of the predicted position on a moving path, the notification signal is output at a timing being later than an ideal timing.

When the predicted position and the estimated position do not pass through the signal output position, an output operation itself of the notification signal is not primarily performed.

The disclosed technique has been made in consideration of the above description, and its objective is to provide a robot control apparatus, a robot control method, and a robot system that can appropriately output a notification signal.

A robot control apparatus disclosed in this application includes: a register that registers a signal output position representing a position at which a predetermined signal should be output; a position acquirer that acquires a reference portion position representing a position of a reference portion in a robot; a vector calculator that calculates a first vector representing a moving direction of the reference portion at the reference portion position and a second vector representing relative positions of the signal output position and the reference portion position; and a determiner that determines whether or not the predetermined signal is output on the basis of the first vector and the second vector that are calculated by the vector calculator.

According to one aspect of the robot control apparatus disclosed in the application, a notification signal representing that a predetermined portion in the robot moves to a position determined in advance can be appropriately output.

BRIEF DESCRIPTION OF THE DRAWINGS

Fig. 1 is an explanatory diagram of a signal output determining method according to a first embodiment;
Fig. 2 is a diagram showing a configuration of a robot system according to the first embodiment;
Fig. 3 is a block diagram showing a configuration of a robot control apparatus according to the first embodiment;
Fig. 4A is a diagram showing an example of an assumption in a vector calculating process;
Fig. 4B is a diagram showing a relationship (part 1) between vectors;
Fig. 4C is a diagram showing a relationship (part 2) between vectors;
Fig. 4D is a diagram showing a relationship (part 3) between vectors;
Fig. 5A is a diagram showing a determination (part 1) of a signal output determining process based on an inner product between the vectors;
Fig. 5B is a diagram showing a determination (part 2) of the signal output determining process based on the inner product between the vectors;

Fig. 5C is a diagram showing a determination (part 3) of the signal output determining process based on the inner product between the vectors;

Fig. 6A is a diagram showing a determination (part 1) of a signal output determining process based on a magnitude of a vector;

Fig. 6B is a diagram showing a determination (part 2) of the signal output determining process based on the magnitude of the vector;

Fig. 6C is a diagram showing a determination (part 3) of the signal output determining process based on the magnitude of the vector;

Fig. 7A is a diagram showing a variation (part 1) of vector calculation;

Fig. 7B is a diagram showing a variation (part 2) of vector calculation;

Fig. 8 is a flow chart showing procedures executed by a robot control apparatus;

Fig. 9 is a flow chart showing procedures of a vector calculating process;

Fig. 10 is a block diagram showing a configuration of a robot control apparatus according to a second embodiment;

Fig. 11A is a diagram showing an example of a double-arm robot; and

Fig. 11B is a diagram showing an operation of the double-arm robot.

DESCRIPTION OF THE EMBODIMENTS

Embodiments of a robot control apparatus, a robot control method, and a robot system that are disclosed in this application will be described below in detail with reference to the accompanying drawings. The present invention is not limited to an exemplification in the embodiments (will be described below).

In the embodiments (will be described below), in terms of simplification of the explanation, the robot two-dimensionally moves in the explanation. This explanation can also be applied when the robot three-dimensionally moves.

First Embodiment

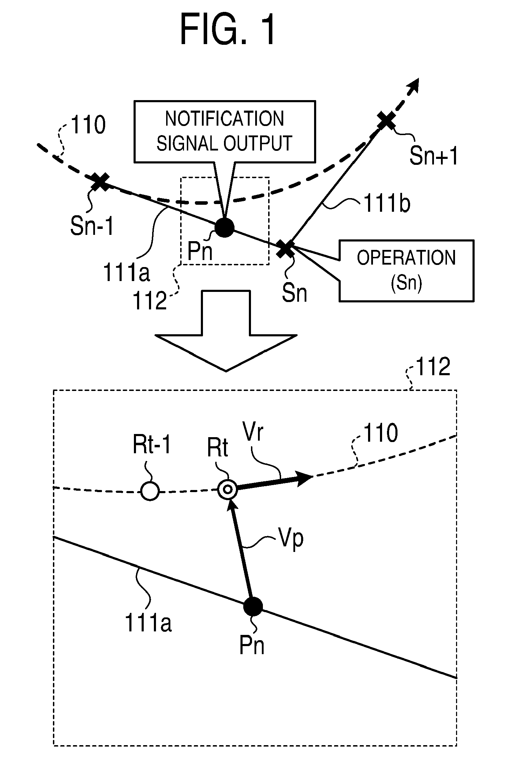

A signal output determining method according to a first embodiment will now be described with reference to Fig. 1. Fig. 1 is an explanatory diagram of a signal output determining method according to the first embodiment.

As shown in Fig. 1, a path (hereinafter referred to as a "command path") along which the reference portion of the robot moves is determined by a plurality of teaching points S. In the following explanation, when a plurality of teaching points S are discriminated from each other, subscript additional characters are added to the teaching points S, respectively. For example, an nth teaching point S from the teaching point S serving as a start point of the command path is represented as a teaching point $S_n$, and the first previous point of the teaching point $S_n$ is represented as a teaching point $S_{n-1}$.

As shown in Fig. 1, the command path is expressed as a set of paths obtained by connecting the teaching points S with straight lines. For example, in the case shown in Fig. 1, a path 111a obtained by connecting the teaching point $S_{n-1}$ and the teaching point $S_n$ with a straight line and a path 111b obtained by connecting the teaching point $S_n$ and a teaching point $S_{n+1}$ with a straight line correspond to a command path.

In this case, as shown in Fig. 1, an operation ($S_n$) that is an operation to be performed by the robot is associated with the teaching point $S_n$. In this case, in general, the robot is not designated to start an operation ($S_n$) until the reference portion of the robot reaches the teaching point $S_n$.

However, in order to efficiently perform the operation ($S_n$), it is preferably detected that the reference portion of the robot is close to the teaching point $S_n$ before the reference portion reaches the teaching point $S_n$. For this reason, as shown in Fig. 1, a signal output position $P_n$ is set near the teaching point $S_n$ on the path 111a.

Assuming that a notification signal is output when the reference portion of the robot reaches a signal output position $P_n$, the robot can be designated to start the operation ($S_n$) in response to the output notification signal. A moving track of the reference portion of the robot, like a moving track 110 shown in Fig. 1, may not pass through the signal output position $P_n$.

In the signal output determining method according to the first embodiment, on the basis of a vector Vr representing a moving direction of the reference portion at the latest reference portion position and a vector Vp representing relative positions of the latest reference portion position and the signal output position $P_n$, a timing at which a notification signal corresponding to the signal output position $P_n$ is output is determined.

More specifically, in the signal output determining method according to the first embodiment, on the basis of a relationship between the vector Vr and the vector Vp, it is detected that the latest reference portion position is closest to the signal output position $P_n$. The vector Vp need only include at least a "direction", and the "magnitude" need not be considered to be 1 like a unit vector.

More specifically, as shown in an enlarged diagram of a region 112 shown in Fig. 1, signal output determining method according to the first embodiment, the vector Vr is calculated on the basis of a reference portion position R acquired from the robot. In this case, the reference portion positions R are acquired at predetermined sampling intervals.

In the following explanation, when a plurality of reference portion positions R are discriminated from each other, subscript additional characters are added to the reference portion positions R, respectively. For example, the latest reference portion position R is expressed as a reference portion position $R_t$, the reference portion position R acquired previously to the reference portion position $R_t$ is expressed as a reference portion position $R_{t-1}$.

When the sampling interval is sufficiently small, the vector Vr shown in Fig. 1 can be approximated by the latest reference portion position $R_t$ and the reference portion position $R_{t-1}$ acquired previously to the latest reference portion position $R_t$ because the vector Vr means a moving direction of the reference portion at the reference portion position $R_t$. For example, the vector Vr can be calculated by the following equation (1).

$$Vr = R_t - R_{t-1} \quad \cdots (1)$$

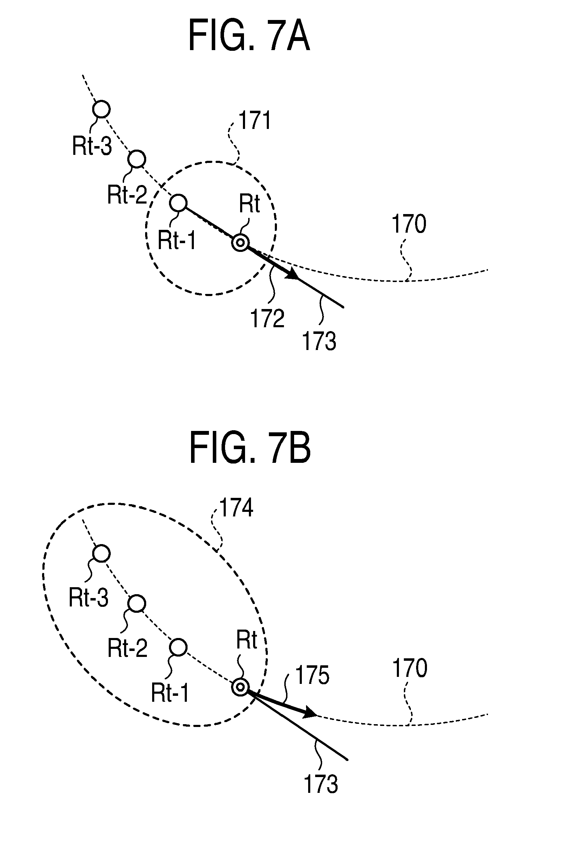

There are a plurality of various calculations for the vector Vr. This point will be described in detail with reference to Figs. 7A and 7B.

In the signal output determining method according to the first embodiment, the vector Vp is calculated on the basis of the latest reference portion position $R_t$ and the signal output position $P_n$. For example, the vector Vp is calculated by the following equation (2).

$$Vp = R_t - P_n \quad \cdots (2)$$

In the signal output determining method according to the first embodiment, an output determination of a notification signal is performed on the basis of the calculated vector Vr and the Vector Vp. For example, in the signal output determining method according to the first embodiment, it is determined that, when a change in sign of an inner product representing an inner product between the vector Vr and the vector Vp is detected, a notification signal is output.

More specifically, a magnitude of the vector Vr is represented by vr, a magnitude of the vector Vp is represented by vp, an angle between the vector Vr and the vector Vp is represented by $\theta$, and the inner product is represented by I. In this case, the inner product I is expressed by the following equation (3).

$$I = vr \times vp \times \cos\theta \quad \cdots (3)$$

In this case, when the reference portion position R comes closest to the signal output position $P_n$, the angle between the vector Vr and the vector Vp is 90°. More specifically, in this case, since "cos 90° = 0" is given, the inner product I becomes 0 according to equation (3). Thus, when the inner product I is considered, it can be detected that the reference portion position $R_t$ comes closest to the signal output position $P_n$.

Since the vector Vr and the vector Vp are expressed by two-dimensional x-y coordinates $(Vr_x, Vr_y)$ and $(Vp_x, Vp_y)$, respectively, the inner product I can be calculated by the following equation (4).

$$I = Vr_x \times Vp_x + Vr_y \times Vp_y \quad \cdots (4)$$

More specifically, the inner product I can be calculated by a simple calculation given by equation (4). Therefore, a processing load of a method of detecting on the basis of the inner product I that the reference portion position $R_t$ comes closest to the signal output position $P_n$ is very low. On the basis of the inner product I calculated by equation (4) and the known values vr and vp, an angle $\theta$ between the vector Vr and the vector Vp can be calculated from equation (3).

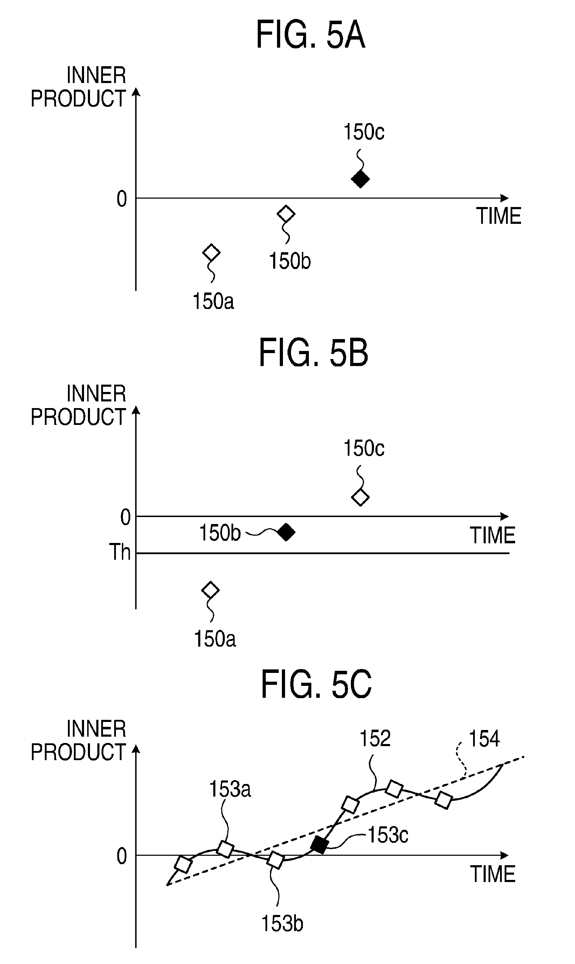

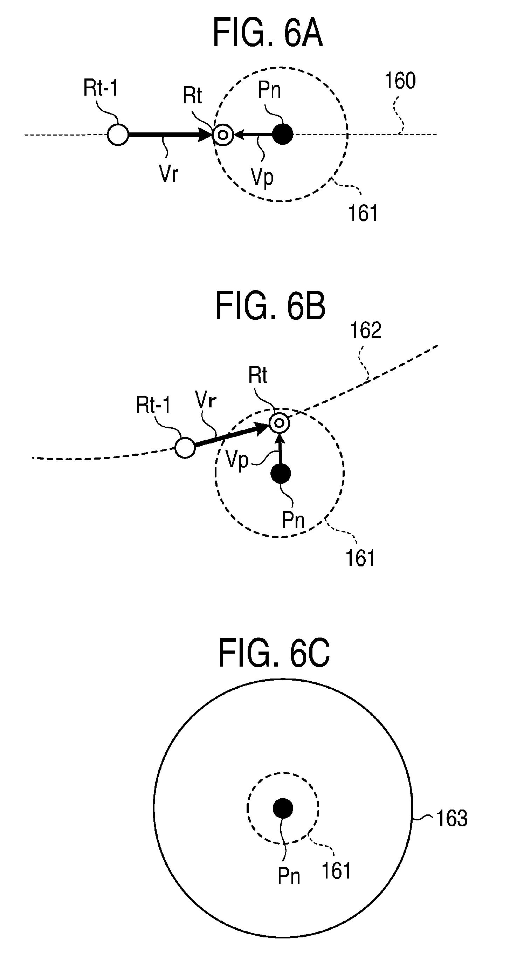

There are a plurality of various methods of output determination in consideration of the relationship between the vector Vr and the vector Vp. This point will be described in detail below with reference to Figs. 5A to 5C. In the signal output determining method according to the first embodiment, an output determination based on the magnitude of the calculated vector Vp can also be used. This point will be described in detail below with reference to Figs. 6A to 6C.

In this manner, in the signal output determining method according to the first embodiment, it is assumed that the two vectors, i.e., the vector Vr representing a moving direction of the reference portion at the latest reference portion

position $R_t$ and the vector Vp representing relative positions of the latest reference portion position $R_t$ and the signal output position $P_n$ are used for output determination of a notification signal.

Therefore, even though the reference portion position R of the robot does not pass through the signal output position P, a timing at which the reference portion position R comes closest to the signal output position P can be accurately detected. For this reason, an output of the notification signal described above can be appropriately performed.

More specifically, according to the signal output determining method according to the first embodiment, a situation in which an output operation itself of the notification signal is not performed or a situation in which an output timing of the notification signal is excessively early or late can be avoided.

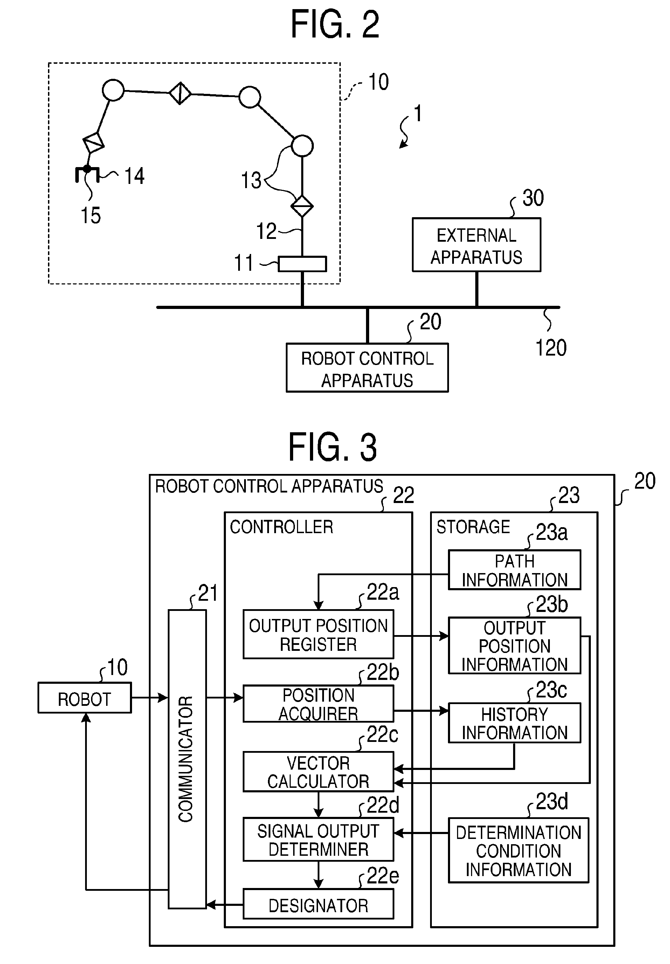

A configuration of a robot system according to the first embodiment will be described below with reference to Fig. 2. Fig. 2 is a diagram showing a configuration of the robot system according to the first embodiment. As shown in Fig. 2, a robot system 1 includes a robot 10, a robot control apparatus 20, and an external apparatus 30.

As shown in Fig. 2, the robot 10, the robot control apparatus 20, and the external apparatus 30 are connected to each other through a communication network 120. As the communication network 120, a common network such as a cable LAN (Local Area Network) or a wireless LAN can be used.

The robot 10 is fixed to a floor surface or the like through a base 11. The robot 10 has a plurality of robot arms 12, and each of the robot arms 12 is connected to another robot arm 12 through a joint having a servo motor 13.

The joint having the servo motor 13 shown in Fig. 2 includes a joint indicated by a "circle" and a joint indicated by a "rhombus". However, both the joints are simply different in direction of a rotating shaft. For example, the joint indicated by the "circle" rotates to change an angle between the robot arms 12 on both the sides. The joint indicated by the "rhombus" rotates while holding the angle between the robot arms 12 on both the sides.

Of the robot arms 12 connected to each other through the joints each having the servo motor 13, a distal end of the robot arm 12 being closest to the base 11 is fixed to the base 11, and a robot hand 14 is connected to a distal end of the robot arm 12 being farthest from the base 11. At a predetermined position on the robot hand 14, a reference portion 15 serving as a reference position of the robot 10 is defined.

In this case, as an end effector attached to the distal end of the robot arm 12, a robot hand is exemplified here. However, the end effector is not limited to the robot hand. For example, the end effector may be a welding machine or a painting machine.

The robot 10 independently rotates each of the servo motors 13 by an arbitrary angle according to a moving designation from the robot control apparatus 20 or the like to move the reference portion 15 to an arbitrary position. The robot 10 notifies the robot control apparatus 20 of an output value (hereinafter referred to as an "encoder value") from a rotation detector of each of the servo motors 13, for example, a rotating angle from a predetermined reference value.

The robot control apparatus 20 that receives the encoder value from the robot 10 consequently calculates a position of the reference portion 15 on the basis of the received encoder value and an arm length of each of the robot arms 12.

The robot control apparatus 20 is a control apparatus that performs operation control of the robot 10. For example, the robot control apparatus 20 performs control to move the reference portion 15 of the robot 10 according to a command path registered in advance and control to open/close the robot hand 14.

In this case, the robot control apparatus 20 determines a moving amount required to move the reference portion 15 according to the command path with respect to each of the servo motors 13 and indicates each of the determined moving amounts to the robot 10. A configuration of the robot control apparatus 20 will be described later with reference to Fig. 3.

The external apparatus 30 is an input/output device serving as a man-machine interface of the robot control apparatus 20. For example, the external apparatus 30 includes an input device such as a switch, a button, or a key and a display device such as a display. The external apparatus 30 registers a command path to the robot control apparatus 20 according to an input operation from an operator and displays an operation state of the robot 10.

A plurality of robot control apparatuses 20 are arranged, and the external apparatus 30 may be configured as a relay device that relays a signal between the robot control apparatuses 20. In this case, the robot control apparatus 20 outputs a notification signal to the external apparatus 30. The external apparatus 30 transmits the received notification signal to another robot control apparatus.

In Fig. 2, the robot control apparatus 20 and the external apparatus 30 are described as different apparatuses. However, the function of the external apparatus 30 may be included in the robot control apparatus 20. The following explanation, for the sake of descriptive convenience, will be made on the assumption that data transmission/reception is performed between the robot 10 and the robot control apparatus 20, i.e., data transmission/reception is performed without the external apparatus 30.

A configuration of the robot control apparatus 20 according to the first embodiment will now be described below with reference to Fig. 3. Fig. 3 is a block diagram showing a configuration of the robot control apparatus 20 according to the first embodiment. As shown in Fig. 3, the robot control apparatus 20 includes a communicator 21, a controller 22, and storage 23. The storage 23 is configured by a storage device such as a nonvolatile storage or a hard disk drive.

The controller 22 further includes an output position register 22a, a position acquirer 22b, a vector calculator 22c, a signal output determiner 22d, and a designator 22e. The storage 23 stores path information 23a, an output position information 23b, history information 23c, and determination condition information 23d.

In Fig. 3, for the sake of descriptive convenience, a function, included in a general robot controller, such as a function of moving the reference portion 15 of the robot 10 according to a command path registered in advance, will be omitted.

The communicator 21 is a communication device such as a LAN board that performs data transmission/reception between the robot 10 and the robot control apparatus 20. The communicator 21 performs a process of giving data received from the robot 10 to the controller 22 and a process of transmitting the data received from the controller 22 to the robot 10.

The controller 22 is a controller that entirely controls the robot control apparatus 20. The output position register 22a reads the path information 23a from the storage 23 and performs a process of calculating the signal output position $P_n$ shown in Fig. 1 on the basis of the read path information 23a. The path information 23a is information that defines coordinates of the teaching points S (see Fig. 1) included in the command path and an order of the teaching points S.

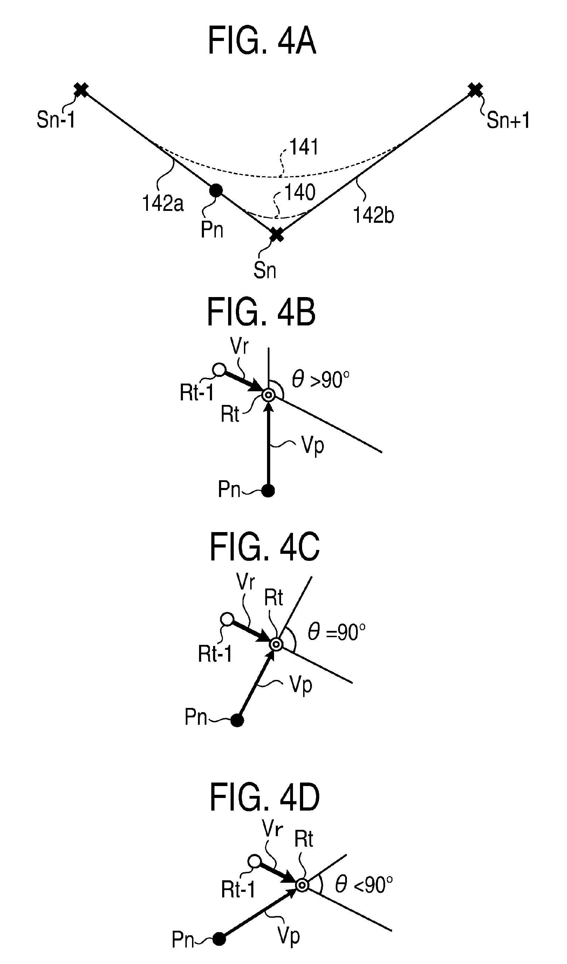

The output position register 22a performs a process of registering the calculated signal output position $P_n$ in the storage 23 as the output position information 23b. A concrete calculation for the signal output position $P_n$ will be described later with reference to Fig. 4A.

The position acquirer 22b acquires the reference portion position R representing an actual position of the reference portion 15 on the basis of the data received from the robot 10 through the communicator 21. More specifically, the position acquirer 22b performs a "forward conversion process" by using an encoder value such as rotating angle data acquired from the servo motors 13 (see Fig. 2) of the robot 10 at predetermined sampling intervals and arm lengths of the robot arms 12 (see Fig. 2) to calculate the reference portion position R.

The "forward conversion process" mentioned here denotes a process of calculating positions and attitudes of links from rotating angles of the joints in a multi-joint link structure. The "backward conversion process" denotes a process of calculating rotating angles of the joints from specific positions or specific attitudes to be satisfied by the links.

In this manner, the position acquirer 22b calculates the reference portion position R on the basis of the rotating angle data acquired from the servo motors 13 (see Fig. 2) of the robot 10. Thus, accuracy of the reference portion position R calculated by the position acquirer 22b is higher than that of a predicted position predicted from a moving track of the robot or that of an estimated position estimated from an operation command for the robot.

In the above explanation, the position acquirer 22b calculates the reference portion position R on the basis of the encoder value acquired from the robot 10. However, the reference portion position R may be acquired by another method. For example, a position sensor may be arranged in the reference portion 15 of the robot 10, and position data detected by the position sensor may be acquired by the position acquirer 22b as the reference portion position R.

The position acquirer 22b also performs a process of storing the acquired reference portion position R in the storage 23 as the history information 23c. In this case, the history information 23c includes at least the coordinates of the latest reference portion position $R_t$ and the coordinates of a first previous reference portion position of the latest reference portion position $R_t$, i.e., the reference portion position $R_{t-1}$ acquired immediately before the latest reference portion position $R_t$. The number of reference portion positions R included in the history information 23c may be set to an arbitrary number that is two or more.

The vector calculator 22c performs a process of calculating the vector Vr and the vector Vp shown in Fig. 1 on the basis of the output position information 23b and the history information 23c in the storage 23. The vector calculator 22c also performs a process of giving the calculated vector Vr and the calculated vector Vp to the signal output determiner 22d.

The signal output determiner 22d determines whether a notification signal is output on the basis of the vector Vr and the vector Vp received from the vector calculator 22c and the determination condition information 23d in the storage 23. More specifically, the signal output determiner 22d performs a process of determining a timing at which the notification signal is output.

The signal output determiner 22d outputs the notification signal to the designator 22e when it is determined that the notification signal is output. The first embodiment describes a case in which the signal output determiner 22d generates a notification signal and outputs the generated notification signal to the designator 22e.

However, the present invention is not limited to the embodiment. A timing at which the notification signal is output may be determined by the signal output determiner 22d, and an outputter (not shown) may be designed to output the notification signal. A destination of the notification signal is not only an inside of the robot control apparatus 20 but also another apparatus, for example, the external apparatus 30 shown in Fig. 2. When a plurality of robot control apparatuses 20 are arranged, a destination of the notification signal may be another robot control apparatus 20.

The determination condition information 23d is information including a determination condition prepared for each of variations of the determining process performed by the signal output determiner 22d. When such determination condition information 23d is changed, the contents of the determining process performed by the signal output determiner 22d can be changed.

When the designator 22e receives the notification signal from the signal output determiner 22d, the designator 22e performs a process of designating an operation corresponding to the received notification signal to the robot 10 through the communicator 21. For example, the designator 22e designates the robot 10 to start an operation ($S_n$) associated with the teaching point $S_n$ corresponding to the signal output position $P_n$ in advance.

Processing contents executed by the robot control apparatus 20 according to the first embodiment will be described in more detail below.

A relationship between the vector Vr and the vector Vp calculated by the vector calculator 22c will be described below with reference to Figs. 4A to 4D. In Fig. 4A, a positional relationship between the teaching point S and the signal output position P serving as assumptions of the explanation will be described. In Figs. 4B to 4D, on the above assumptions, a positional relationship between the reference portion position R and the signal output position P when an angle ($\theta$) between the two vectors changes will be described.

Fig. 4A is a diagram showing an example of the assumption in the vector calculating process. In this case, in Fig. 4A, it is assumed that a start point of the command path is the teaching point $S_{n-1}$, that an intermediate point is the teaching point $S_n$, and that an end point is the teaching point $S_{n+1}$. In this case, the shortest path between the teaching point $S_{n-1}$ and the teaching point $S_n$ is a path 142a, and the shortest path between the teaching point $S_n$ and the teaching point $S_{n+1}$ is a path 142b.

The output position register 22a calculates the signal output position $P_n$ corresponding to the teaching point $S_n$ on the path 142a according to a predetermined condition. For example, as the condition, a distance to the teaching point $S_n$, a time to the teaching point $S_n$, and the like can be used.

If the reference portion 15 (see Fig. 2) of the robot 10 is moved along the path 142a and the path 142b shown in Fig. 4A, the direction of the reference portion 15 sharply changes at the teaching point $S_n$. For this reason, control to move the reference portion 15 along a path 140 shown in Fig. 4A is generally performed. The output position register 22a may calculate the signal output position $P_n$ on the path 140.

However, since a response is delayed in the robot 10, the reference portion 15 may actually move along a path 141 shown in Fig. 4A. In this case, the reference portion 15 moves on the path 141 having the teaching point $S_{n-1}$ as a start point and the teaching point $S_{n+1}$ as an end point.

Specifically, the reference portion 15 moving on the path 141 is coming close to the signal output position $P_n$, comes closest to the signal output position $P_n$, and then comes away from the signal output position $P_n$. Figs. 4B to 4D (will be described below) correspond to the case in which the latest reference portion position $R_t$ is located before the closest position and the case in which the latest reference portion position $R_t$ passes over the closest position.

Figs. 4B to 4D show an example in which the vector Vr is calculated by the above equation (1). More specifically, since the vectors Vr shown in Figs. 4B to 4D are vectors extending from the reference portion position $R_{t-1}$ to the reference portion position $R_t$, the start point of the vector Vr is described as the reference portion position $R_{t-1}$. However, this has the same meaning as that of a description in which the vector Vr is moved in parallel to match the start point of the vector Vr with the reference portion $R_t$.

Figs. 4B to 4D show an example in which the vector Vp is calculated by the above equation (2). More specifically, the vector Vp shown in Figs. 4B to 4D are vectors extending from the signal output position $P_n$ to the latest reference portion position $R_t$.

Fig. 4B is a diagram showing a relationship (part 1) between the vectors. As shown in Fig. 4B, when the latest reference portion position $R_t$ comes gradually close to the signal output position $P_n$, the angle $\theta$ between the vector Vr and the vector Vp is larger than 90°. Thus, since a cos$\theta$ in the equation (3) described above is a negative value, the inner product I is also a negative value.

Fig. 4C is a diagram showing a relationship (part 2) between the vectors. As shown in Fig. 4C, when the latest reference portion position $R_t$ comes closest to the signal output position $P_n$, an angle $\theta$ between the vector Vr and the vector Vp is 90°. Thus, since a cos$\theta$ in the equation (3) described above is 0, the inner product I is also 0.

Fig. 4D is a diagram showing a relationship (part 3) between the vectors. As shown in Fig. 4D, when the latest reference portion position $R_t$ comes gradually away from the signal output position $P_n$, the angle $\theta$ between the vector Vr and the vector Vp is smaller than 90°. Thus, since the cos$\theta$ in the equation (3) described above is a positive value, the inner product I is also a positive value.

Figs. 4B to 4D show a case in which the reference portion 15 of the robot 10 comes close to and away from the signal output position $P_n$ along a path inwardly turning around the signal output position $P_n$. However, the same applies to the case in which the reference portion comes close to and away from the signal output position $P_n$ along a path outwardly turning around the signal output position $P_n$.

When the vector Vp shown in Figs. 4B to 4D is reversed, i.e., when a vector extending from the latest reference portion position $R_t$ to the signal output position $P_n$ is used, the angle between the vector Vr and the vector Vp is an angle obtained by subtracting the angle $\theta$ from 180°.

Therefore, the inner product I in this case is a positive value when the latest reference portion position $R_t$ comes

gradually close to the signal output position $P_n$, is zero when the latest reference portion position $R_t$ is closest to the signal output position $P_n$, and is a negative value when the latest reference portion position $R_t$ comes gradually away from the signal output position $P_n$. More specifically, a change of the inner product I is obtained by reversing the change shown in Figs. 4B to 4D.

A concrete example of a signal output determining process performed by the signal output determiner 22d shown in Fig. 3 will be described below with reference to Figs. 5A to 5C. Figs. 5A to 5C show an example corresponding to a case using the vector Vp having a direction shown in Figs. 4B to 4D, i.e., a direction from the signal output position $P_n$ to the reference portion position $R_t$. As coordinate axes shown in Figs. 5A to 5C, the ordinate denotes the inner product I, and the abscissa denotes time.

Fig. 5A is a diagram showing a determination (part 1) of a signal output determining process based on an inner product I between the vectors. In this case, the determination shown in Fig. 5A is a determination based on a "sign change" of the inner product I.

As described above with reference to Figs. 4B to 4D, the inner product I between the vector Vr and the vector Vp changes a negative value, zero, and a positive value in the order named when the reference portion position R comes close to and away from the signal output position $P_n$. In other words, the sign of the inner product I changes from negative (-) to positive (+).

As described above, since the reference portion positions R are acquired at predetermined sampling intervals, the inner value I calculated on the basis of the reference portion position R is calculated as discontinuous values. Thus, the calculated inner value I may not be zero.

For example, as shown in Fig. 5A, it is assumed that the inner product I increases to a negative value at a point 150a, a negative value at a point 150b, and a positive value at a point 150c. In this case, the signal output determiner 22d determines that a notification signal is output at a timing corresponding to the point 150c at which the inner product I becomes a positive value for the first time.

More specifically, when the sign of the inner product I changes from negative (-) to positive (+) for the first time, the signal output determiner 22d determines that the notification signal is output. When the inner product I is zero, it is understood that a sign is not present. However, in this case, the sign may be regarded as a positive (+) sign.

When the direction of the vector Vp is opposite of the direction of the vector Vp shown in Figs. 4B to 4D, the notification signal may be output when the sign of the inner product changes from positive (+) to negative (-) for the first time.

Fig. 5A shows the determination based on the "sign change" of the inner product I. However, an output of the notification signal may be determined on the basis of a result obtained by comparing the inner product I with a predetermined threshold value.

Fig. 5B is a diagram showing a determination (part 2) of the signal output determining process based on the inner product between the vectors. In this case, the determination shown in Fig. 5B is a determination based on a comparison result between the inner product I and a predetermined threshold value Th. In Fig. 5B, the same points as the points 150a, 150b, and 150c in Fig. 5A are shown.

For example, as shown in Fig. 5B, when the inner product I becomes the threshold value Th or more for the first time, the signal output determiner 22d determines that the notification signal is output. More specifically, the signal output determiner 22d determines that the notification signal is output at a timing corresponding to the point 150b at which the inner product I becomes the threshold value Th or more for the first time.

Fig. 5B illustrates the negative threshold value Th. However, a positive threshold value may be used. When the magnitude of the inner product I, i.e., the absolute value of the inner product I becomes a predetermined value or less, the signal output determiner 22d may determine that the notification signal is output.

When the direction of the vector Vp is opposite of the direction of the vector Vp shown in Figs. 4B to 4D, the notification signal may be output when the inner product I becomes the threshold value Th or less for the first time.

Fig. 5C is a diagram showing a determination (part 3) of the signal output determining process based on the inner product between the vectors. Fig. 5C shows a case in which the calculated inner product I tends to increase but repeatedly slightly increases or decreases.

In the case shown in Fig. 5C, the inner product I exhibits a positive value at the point 153a, exhibits a negative value at the point 153b, and exhibits a positive value at the point 153c again (see a curve 152 shown in Fig. 5C). An increase/decrease of the inner product I may occur due to mixing of noise or the like.

The signal output determiner 22d performs a correction process that smoothes the calculated inner product I. For example, the signal output determiner 22d calculates a moving average of the calculated inner product I to smooth the inner product I (see a correction value 154 shown in Fig. 5C). A correcting process such as a process of applying a low-pass filter to the inner product I may be performed by the signal output determiner 22d.

As shown in Fig. 5C, the inner product I exhibits a positive value at the point 153a, but the correction value 154 exhibits a negative value at time corresponding to the point 153a. In contrast to this, the inner product I exhibits a positive value at the point 153c, and the correction value 154 also exhibits a positive value at time corresponding to the point 153c.

In this case, the signal output determiner 22d determines that the notification signal is not output at the point 153a but is output at a timing corresponding to the point 153c. The timing may be a timing at which the correction value 154 exhibits a positive value for the first time, i.e., a timing corresponding to the point 153b.

In the description shown in Fig. 5C, the correcting process is applied to the case in which the inner product I is compared with 0 as shown in Fig. 5A. However, the correcting process can be also applied to the case in which the inner product I is compared with the threshold value Th as shown in Fig. 5B.

Variations of the signal output determining process performed by the signal output determiner 22d shown in Fig. 3 will be described below with reference to Figs. 6A to 6C.

Fig. 6A is a diagram showing a determination (part 1) of a signal output determining process based on a magnitude of a vector. Fig. 6A shows a case in which the reference portion position R comes straightly close to the signal output position $P_n$.

In this case, as shown in Fig. 6A, since the reference portion position R moves on a straight line 160 passing through the signal output position $P_n$, an angle $\theta$ between the vector Vr and the vector Vp is always 180°. Thus, in this case, a change in sign of the inner product I described in Fig. 5A does not occur.

For this reason, the signal output determiner 22d determines that the notification signal is output when the magnitude of the vector Vp is a predetermined value or less. More specifically, as shown in Fig. 6A, at a timing at which the latest reference portion position $R_t$ comes in a circle 161 having the signal output position $P_n$ as a center and a predetermined radius, the notification signal is output.

More specifically, when the determination shown in Fig. 6A is made, the notification signal can be output even though it cannot be determined on the basis of the relationship between the vector Vr and the vector Vp whether the reference portion position $R_t$ comes closest to the signal output position.

Fig. 6B is a diagram showing a determination (part 2) of the signal output determining process based on the magnitude of the vector. Fig. 6B shows a case in which the reference portion position R comes straightly close to the signal output position $P_n$ through a path 162 that slightly shifts from the signal output position $P_n$.

In this case, as in the case shown in Fig. 6A, a signal output determination may be made on the basis of the magnitude of the vector Vp. As shown in Fig. 6B, when the reference portion position R comes closest to the signal output position $P_n$ inside the circle 161, a change in sign of the inner product I does not occur outside the circle 161. In this case, inside the circle 161, a determining process based on the magnitude of the vector Vp is performed.

Fig. 6C is a diagram showing a determination (part 3) of the signal output determining process based on the magnitude of the vector. Fig. 6C shows, in addition to the circle 161 shown in FIG. 6A or FIG. 6B, a circle 163 having a radius larger than that of the circle 161.

The circle 163 indicates an effective area of the signal output determining process performed by the signal output determiner 22d. More specifically, the signal output determiner 22d does not perform the determining process when the latest reference portion position $R_t$ is outside the circle 163, and performs the determining process when the latest reference portion position $R_t$ is inside the circle 163.

The signal output determiner 22d performs a determining process based on a change in sign of the inner product I inside the circle 163, and performs a determining process based on the magnitude of the vector Vp inside the circle 161. A threshold value to be compared with the magnitude of the vector Vp, i.e., the radius of the circle 161 and the radius of the circle 163 can be arbitrarily determined.

In this manner, the signal output determiner 22d can use the magnitude of the vector Vp as a start condition or an end condition of the signal output determining process. In this manner, the determining process based on the relationship between the vector Vr and the vector Vp can be performed in only an appropriate area.

Variations of procedures of calculating the vector Vr will be described below with reference to Figs. 7A and 7B.

Fig. 7A is a diagram showing a variation (part 1) of vector calculation. Fig. 7A shows a reference portion position $R_{t-3}$, a reference portion position $R_{t-2}$, the reference portion position $R_{t-1}$, and the reference portion position $R_t$. It is assumed that these positions are on a path 170. More specifically, it is assumed that the reference portion position R moves on the path 170.

Fig. 7A, as expressed in the equation (1) described above, shows a case in which the vector Vr representing a moving direction of the reference portion 15 at the latest reference portion position $R_t$ is calculated by the latest reference portion position $R_t$ and the reference portion position $R_{t-1}$ acquired previously to the reference portion position $R_t$ (see a circle 171 in Fig. 7A).

In this manner, when it is assumed that the vector Vr is calculated from the reference portion position $R_t$ and the reference portion position $R_{t-1}$, a vector Vr can be calculated by a simple process. When a sampling interval of the reference portion positions R is sufficiently short, any problem in accuracy of the vector Vr is not posed. The vector Vr in Fig. 7A is expressed as a vector 172 on a straight line 173 including the reference portion position $R_{t-1}$, and the reference portion position $R_t$.

Fig. 7B is a diagram showing a variation (part 2) of vector calculation. Here, in Fig. 7B, the same symbols are used to designate the same elements as those in Fig. 7A. In the case shown in Fig. 7B, the vector calculator 22c calculates the direction of the vector Vr representing a moving direction of the reference portion 15 at the latest reference portion position $R_t$ to cause the reference portion 15 to come more close to the path 170.

More specifically, the vector calculator 22c calculates the vector Vr by further using the reference portion position R (reference portion position $R_{t-2}$, reference portion position $R_{t-3}$, or the like) older than the reference portion position $R_{t-1}$ (see an ellipse 174 in Fig. 7B).

For example, the vector calculator 22c calculates the vector Vr on the basis of a curvature of the path 170 calculated from the reference portion position $R_{t-2}$, the reference portion position $R_{t-1}$, and the reference portion position $R_t$ (see a vector 175 shown in Fig. 7B).

A curvature of the path 170 may be further calculated from the reference portion position $R_{t-3}$, the reference portion position $R_{t-2}$, and the reference portion position $R_{t-1}$, and the vector Vr may be calculated in consideration of a difference between the curvature and the previously calculated curvature. The vector 172 calculated once in Fig. 7A may be corrected on the basis of the curvature or a change in curvature to calculate the vector Vr.

In this manner, the vector Vr is calculated by using at least three of the reference portion positions R to make it possible to more improve the accuracy of the vector Vr.

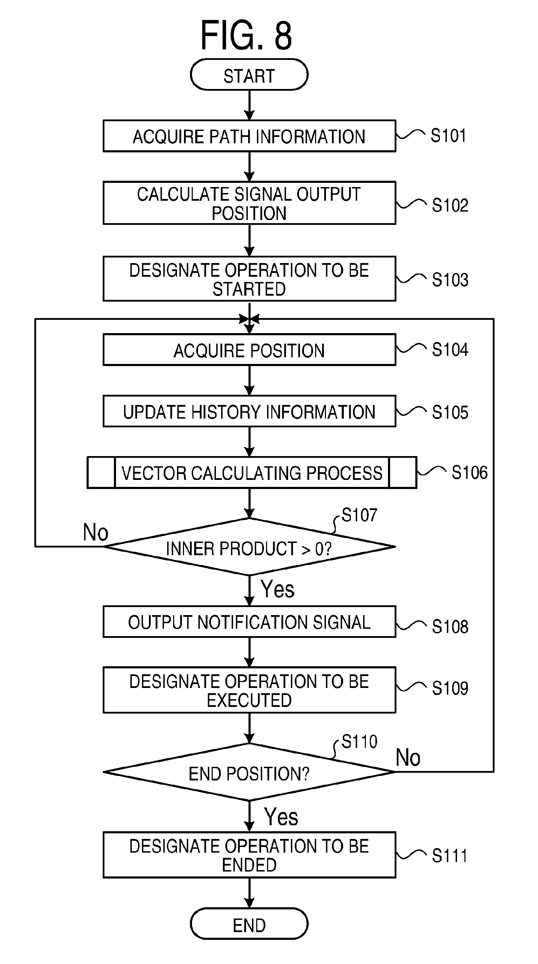

Procedures executed by the robot control apparatus 20 shown in Fig. 3 will be described below with reference to Fig. 8. Fig. 8 is a flow chart showing procedures executed by the robot control apparatus 20.

As shown in Fig. 8, the output position register 22a acquires the path information 23a (step S101) and calculates a signal output position R on the basis of the acquired path information 23a (step S102). The output position register 22a registers the calculated signal output position R on the output position information 23b.

Subsequently, the robot control apparatus 20 designates the robot 10 to start an operation (step S103), and the position acquirer 22b acquires a position of the reference portion 15 of the robot 10 (step S104). The position acquirer 22b updates the history information 23c by using a newly acquired position (step S105).

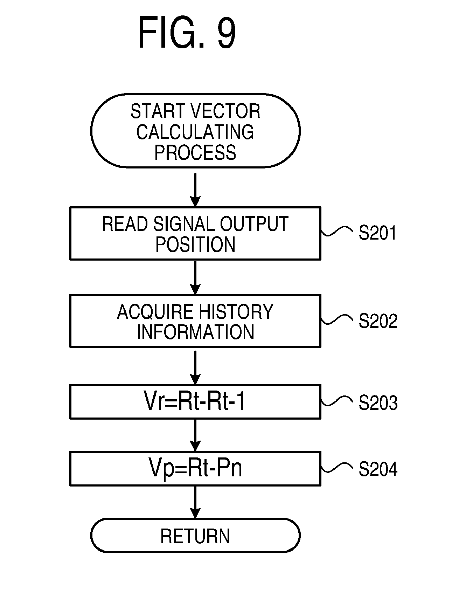

The vector calculator 22c performs the vector calculating process on the basis of the output position information 23b and the history information 23c (step S106). The detailed procedures of the vector calculating process will be described later with reference to Fig. 9.

The signal output determiner 22d determines whether or not the notification signal is output on the basis of the vector Vr and the vector Vp calculated by the vector calculator 22c. For example, the signal output determiner 22d determines whether or not the inner product I between the vector Vr and the vector Vp is larger than 0 (step S107). In step S107, it may be determined whether or not the inner product I is 0 or more.

When the inner product I is larger than 0 (step S107, Yes), the notification signal is output (step S108). When the determination condition in step S107 is not satisfied (step S107, No), the processes subsequent to step S104 are repeated.

The designator 22e that receives the notification signal from the signal output determiner 22d designates the robot 10 to execute a predetermined operation (step S109). The robot control apparatus 20 determines whether or not the position of the reference portion 15 of the robot 10 reaches the end position (step S110).

When the position of the reference portion 15 of the robot 10 reaches the end position (step S110, Yes), the robot control apparatus 20 designates the robot 10 to end the operation (step S111) and ends the process. When the determination condition in step S110 is not satisfied (step S110, No), the processes subsequent to step S104 are repeated.

Step S107 shown in Fig. 8 illustrates the case in which the signal output determiner 22d performs the determining process shown in Fig. 5A. However, the signal output determiner 22d may perform the determining process in Figs. 5B, 5C, 6A, 6B, or 6C.

Detailed procedures of the vector calculating process shown in step S106 in Fig. 8 will be described below with reference to Fig. 9. Fig. 9 is a flow chart showing procedures of a vector calculating process.

The vector calculator 22c reads the position of the signal output position P concerned from the output position information 23b (step S201) and acquires the history information 23c (step 5202). The order of step S201 and step S202 may be reversed, and step S201 and step S202 may be performed by parallel processing.

The vector calculator 22c calculates the vector Vr by using the equation (1) described above (step S203), calculates the vector Vp by using the equation (2) described above (step S204), and returns. The order of step S203 and step S204 may be reversed, and step S203 and step S204 may be performed by parallel processing.

As described above, in the first embodiment, the output position register registers a signal output position (P) representing a position to which the notification signal should be output, and the position acquirer acquires the reference portion position (R) representing the position of the reference portion in the robot. In the first embodiment, the vector calculator calculates the first vector (Vr) representing a speed of the reference portion at the reference portion position (R) and the second vector (Vp) representing relative positions of the signal output position (P) and the reference portion position (R).

In the first embodiment, the signal output determiner determines whether or not a notification signal is output on the basis of the first vector (Vr) and the second vector (Vp) calculated by the vector calculator.

Thus, according to the robot control apparatus according to the first embodiment, if the reference portion position (R) of the robot does not pass through the signal output position (P) , the notification signal can be appropriately output. More specifically, according to the robot control apparatus according to the first embodiment, a situation in which an output operation itself of the notification signal is not performed or a situation in which an output timing of the notification signal is excessively early or late can be avoided.

Incidentally, the first embodiment described above describes the case in which the robot control apparatus acquires only the reference portion position (R) from the robot. However, the robot control apparatus may also acquire a speed of the robot at the reference portion position (R). For this reason, in a second embodiment described below, a description will be given of a case in which the robot control apparatus acquires the speed at the reference portion position (R).

Second Embodiment

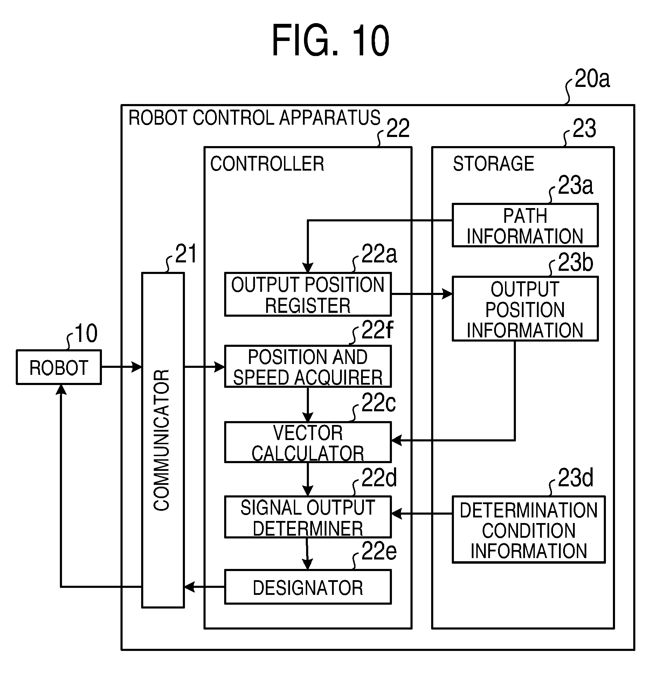

Fig. 10 is a block diagram showing a configuration of a robot control apparatus 20a according to the second embodiment. Here, in Fig. 10, the same reference symbols are used to designate constituent elements corresponding to the constituent elements in the robot control apparatus 20 (see Fig. 3) according to the first embodiment. Hereinafter, an overlapping explanation between the first embodiment and the second embodiment will be omitted.

As shown in Fig. 10, since the robot control apparatus 20a according to the second embodiment includes a position and speed acquirer 22f in place of the position acquirer 22b, the robot control apparatus 20a is different from the robot control apparatus 20 according to the first embodiment. The robot control apparatus 20a according to the second embodiment is different from the robot control apparatus 20 according to the first embodiment also in that the history information 23c is not stored in the storage 23.

More specifically, the position and speed acquirer 22f acquires the latest reference portion position $R_t$ of the robot 10 and a speed of the reference portion 15 at the latest reference portion position $R_t$ from the robot 10 through the communicator 21. The position and speed acquirer 22f gives the acquired reference portion position $R_t$ and the acquired speed to the vector calculator 22c.

The vector calculator 22c directly employs the speed received from the position and speed acquirer 22f as the vector Vr. The vector calculator 22c calculates the vector Vp by the same method as that in the first embodiment on the basis of the reference portion position $R_t$ received from the position and speed acquirer 22f.

In this manner, when the robot control apparatus 20a acquires the speed at the reference portion position $R_t$ from the robot 10, a speed sensor may be arranged in the reference portion 15 of the robot 10. For example, as the speed sensor, a sensor using Doppler effect or the like that detects a reflected wave of a radiation wave such as light or sound and detects a speed on the basis of a difference between frequencies of the detected reflected wave and the radiation wave can be used.

According to the robot control apparatus 20a according to the second embodiment, an output timing of a notification signal can be determined by a process that is simpler than that in the first embodiment.

The robot control apparatus can be configured by, for example, a computer. In this case, the controller is a CPU (Central Processing Unit), and the storage is a memory. The functions of the controller can be realized by loading a program created in advance onto the controller and executing the program.

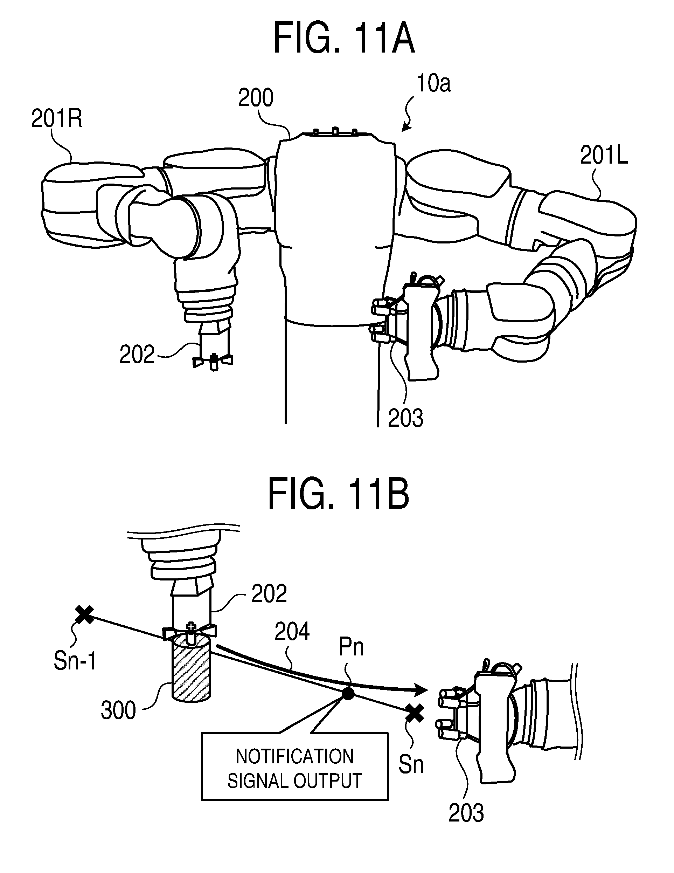

Examples of the robots 10 used in the first embodiment and the second embodiment will be described below with reference to Figs. 11A and 11B. Fig. 11A is a diagram showing an example of a double-arm robot 10a, and Fig. 11B is a diagram showing an operation of the double-arm robot 10a. The following description will be made on the assumption that the double-arm robot 10a is regarded as a person.

As shown in Fig. 11A, the double-arm robot 10a includes a rotary trunk 200. The trunk 200 pivots around a waist. A right arm 201R and a left arm 201L are connected to the trunk 200. Each of the right arm 201R and the left arm 201L corresponds to the robot 10 shown in Fig. 2.

More specifically, the right arm 201R and the left arm 201L operate by using joints such as shoulders, elbows, or wrists as shafts. In the double-arm robot 10a shown in Fig. 11A, a robot hand 202 including a gripping mechanism is connected to a distal end of the right arm 201R, and a robot hand 203 including an adsorbing mechanism is connected to a distal end of the left arm 201L.

For example, the double-arm robot 10a grips a predetermined object with the robot hand 202 of the right arm 201R and performs an operation of regripping the object with the robot hand 203 of the left arm 201L.

More specifically, the robot hand 202 is moved while gripping the predetermined object with the robot hand 202 of the right arm 201R and positioned near the robot hand 203 of the left arm 201L. When the robot hand 203 of the left arm 201L completely adsorbs the object, the robot hand 202 of the right arm 201R performs an operation of releasing the object.

When the right arm 201R and the left arm 201L are interlocked to be operated, moving control needs to be performed such that the right arm 201R is not in contact with the left arm 201L. In this manner, when the plurality of robots 10 are interlocked to be operated, the robots 10 are preferably smoothly cooperated.

For example, as shown in Fig. 11B, a description will be given below of a case in which the robot hand 202 of the right arm 201R is controlled to move from the teaching point $S_{n-1}$ to the teaching point $S_n$ and the robot hand 203 of the left arm 201L that waits near the teaching point $S_n$ adsorbs a object 300.

In this case, as described above, on the front side (robot hand 202 side shown in Fig. 11B) of the teaching point S, the signal output position $P_n$ is set. However, an actual moving path 204 of the robot hand 202 may not pass through the signal output position $P_n$.

In this case, by using the robot control apparatus 20 described in the first embodiment or the robot control apparatus 20a described in the second embodiment, the notification signal can be output when the robot hand 202 comes closest to the signal output position $P_n$. When an adsorbing operation of the robot hand 203 is started on the basis of the notification signal, a receiving/giving operation of the object 300 can be reliably and smoothly performed. The robots 10 can be reliably prevented from being in contact with each other.

In this manner, the contents disclosed in the embodiments can be widely applied to various robot systems. In the embodiments, the robot two-dimensionally moves in the explanation. However, when the robot three-dimensionally moves, an inner product between vectors or a magnitude of a vector may be calculated by using coordinates expressed on an x-y-z coordinate system.

Further effects and modifications can be easily derived by persons skilled in the art. For this reason, a broader aspect of the present invention is not limited to the specific detailed and typical embodiments that are expressed and described above. Therefore, the invention can be variously changed without departing from the spirit or scope of the aspect of the concept of a comprehensive invention defined by the scope of the accompanying scope of claims and an equivalence thereof.

**Claims**

1. A robot control apparatus comprising:

   a register that registers a signal output position representing a position at which a predetermined signal should be output; a position acquirer that acquires a reference portion position representing a position of a reference portion in a robot;
   a vector calculator that calculates a first vector representing a moving direction of the reference portion at the reference portion position and a second vector representing relative positions of the signal output position and the reference portion position; and
   a determiner that determines whether or not the predetermined signal is output based on the first vector and the second vector that are calculated by the vector calculator.

2. The robot control apparatus according to claim 1, wherein the determiner determines whether or not the predetermined signal is output based on an inner product between the first vector and the second vector.

3. The robot control apparatus according to claim 2, wherein the determiner determines that the predetermined signal is output when the inner product changes in sign.

4. The robot control apparatus according to claim 2, wherein the determiner determines that the predetermined signal is output when an absolute value of the inner product is not more than a predetermined value.

5. The robot control apparatus according to any one of claims 1 to 4, further comprising a history storage that stores a history of the reference portion position acquired by the position acquirer, wherein
   the vector calculator calculates a relative position of the latest reference portion position to the immediately previous reference portion position as the first vector.

6. The robot control apparatus according to claim 5, wherein the vector calculator corrects the calculated first vector based on the reference portion position older than the immediately previous reference portion position.

7. The robot control apparatus according to any one of claims 1 to 6, wherein the determiner determines whether or not the predetermined signal is output based on a magnitude of the second vector.

8. A robot control method comprising:

   a registering step of registering a signal output position representing a position at which a predetermined signal should be output;
a position acquiring step of acquiring a reference portion position representing a position of a reference portion in a robot;
a vector calculating step of calculating a first vector representing a moving direction of the reference portion at the reference portion position and a second vector representing relative positions of the signal output position and the reference portion position; and
a determining step of determining whether or not the predetermined signal is output based on the first vector and the second vector that are calculated by the vector calculating step.

9. A robot system comprising:

one robot or a plurality of robots that operate based on a teaching point registered in advance and execute an operation associated with the teaching point in advance;
a register that registers a signal output position representing a position at which a predetermined signal should be output;
a position acquirer that acquires a reference portion position representing a position of a reference portion in the robot;
a vector calculator that calculates a first vector representing a moving direction of the reference portion at the reference portion position and a second vector representing relative positions of the signal output position and the reference portion position;
a determiner that determines whether or not the predetermined signal is output based on the first vector and the second vector that are calculated by the vector calculator; and a designator that designates the robot to perform a predetermined operation when the predetermined signal is output.

# FIG. 1

# FIG. 2

# FIG. 3

# FIG. 4A

# FIG. 4B

# FIG. 4C

# FIG. 4D

# FIG. 5A

# FIG. 5B

# FIG. 5C

# FIG. 6A

# FIG. 6B

# FIG. 6C

# FIG. 7A

# FIG. 7B

# FIG. 8

START

ACQUIRE PATH INFORMATION — S101

CALCULATE SIGNAL OUTPUT POSITION — S102

DESIGNATE OPERATION TO BE STARTED — S103

ACQUIRE POSITION — S104

UPDATE HISTORY INFORMATION — S105

VECTOR CALCULATING PROCESS — S106

S107
No ← INNER PRODUCT > 0?
Yes

OUTPUT NOTIFICATION SIGNAL — S108

DESIGNATE OPERATION TO BE EXECUTED — S109

S110
END POSITION? → No
Yes

DESIGNATE OPERATION TO BE ENDED — S111

END

# FIG. 9

```
        ┌─────────────────────┐
        │    START VECTOR      │
        │    CALCULATING       │
        │     PROCESS          │
        └─────────────────────┘
                  │
                  ▼
        ┌─────────────────────┐
        │  READ SIGNAL OUTPUT  │──── S201
        │      POSITION        │
        └─────────────────────┘
                  │
                  ▼
        ┌─────────────────────┐
        │   ACQUIRE HISTORY    │──── S202
        │    INFORMATION       │
        └─────────────────────┘
                  │
                  ▼
        ┌─────────────────────┐
        │    Vr=Rt-Rt-1        │──── S203
        └─────────────────────┘
                  │
                  ▼
        ┌─────────────────────┐
        │    Vp=Rt-Pn          │──── S204
        └─────────────────────┘
                  │
                  ▼
        ┌─────────────────────┐
        │      RETURN          │
        └─────────────────────┘
```

# FIG. 10

20a

ROBOT CONTROL APPARATUS 22

23

CONTROLLER

STORAGE

23a

PATH INFORMATION

22a

OUTPUT POSITION REGISTER

23b

OUTPUT POSITION INFORMATION

21

10

ROBOT

COMMUNICATOR

22f

POSITION AND SPEED ACQUIRER

22c

VECTOR CALCULATOR

22d

SIGNAL OUTPUT DETERMINER

23d

DETERMINATION CONDITION INFORMATION

22e

DESIGNATOR

# FIG. 11A

201R
200
10a
201L
202
203

# FIG. 11B

202
204
Pn
Sn-1
300
NOTIFICATION
SIGNAL OUTPUT
Sn
203

**EP 2 447 015 A2**

## REFERENCES CITED IN THE DESCRIPTION

**Patent documents cited in the description**

- JP 9258812 A

- JP 2006243926 A